# EUROPEAN PATENT SPECIFICATION

(11) **EP 0 887 218 B1**
(45) Date of publication and mention of the grant of the patent: **30.07.2003**
(21) Application number: 98109488.1
(22) Date of filing: 26.05.1998
(51) Int. Cl.: B60K 15/05

(54) **Tank inlet cover**
Tankklappe
Trappe d' obturation de la tubulure de remplissage

(30) Priority: 23.06.1997 DE 29710918 U
(43) Date of publication of application: 30.12.1998
(73) Proprietor: ITW-ATECO GmbH, D-22844 Norderstedt (DE)
(72) Inventor: Stapf, Uwe, 97285 Röttingen (DE)
(74) Representative: Patentanwälte Hauck, Graalfs, Wehnert, Döring, Siemons, Schildberg

(56) References cited:
- DE-U- 29 507 621
- FR-A- 2 731 391
- US-A- 5 066 062

## Description

The invention relates to a refueling flap system according to the preamble of patent claim 1.

For refueling vehicles in their car body usually a filling connection piece is provided whose opening e.g. may be closed by way of a lockable turn-lock closure. The connection piece and closure for aesthetic reasons and in order to reduce the danger of injury are usually sunk into a refueling trough in the car body. The refueling trough is usually closable by way of a refueling flap and is thus hinged to the car body.

The design of the opening and closing mechanism varies with the known refueling flaps: the flap may be operated by hand and may be kept in the closed or open position by way of spring force. Another known refueling flap envisages a bar mechanism operable from the inner space of the vehicle by way of a pull wire, which lets the refueling flap flick open by way of spring force as soon as the bar is actuated. This flap is then closed by hand so that the bar again clicks in and keeps the flap closed.

The opening and closing movement of these known refueling flaps is fast and abrupt when they as usual are supported by spring force, and also they act "rickety" when no spring is provided. By way of the fact that with the known spring guided embodiment form the flap flicks in the open or closed end position, corresponding abutment surfaces may wear. Furthermore irritating noises may be produced.

From FR-A-2 731 391 a refueling flap system of the above-mentioned type has become known wherein the refueling flap has a toothed segment which meshes a pinion. When the flap is moved from the closed to the opened position and vice versa the flap and thus the pinion moves translatorily. The pinion is supported for rotation about an eccentric axis and cooperates with a rotational damper. Spring means are provided to move the flap towards the opened position.

It is the object of the invention to simply control the movement of a refueling flap.

This object is achieved with the present invention by the features of patent claim 1.

According to the invention the flap movement for opening and/or closing a refueling flap for a refueling trough on a car body is dampened, when pivoting through a hinge mechanism. The toothed segment meshes with a pinion which is separately connected to a rotary damper. The damper is a rotational damper which is filled with a viscous fluid. The shaft of such a known rotational damper is in rotational connection with the pinion. The refueling flap is hinged via a U-shaped arm in the refueling trough. One limb of the arm is connected to the toothed segment and the other limb is attached to the refueling flap. The toothed segment and the arm may be formed of one-piece which is particularly advantageous with manufacture with the injection moulding method.

By way of this refueling flap according to the invention the opening and closing movement of the flap may advantageously be slowed down. By way of suitable known direction-dependent dampers (one-way dampers) the refueling flap may also be designed such that according to requirements only the opening movement or the closing movement of the flap is dampened. The dampened slowed down movement of the flap has the effect with the user of a less "rickety", quality mechanism. With refueling flaps which are guided into the open or closed end position by way of spring force the corresponding abutment surfaces according to the invention wear less with the refueling flap braked according to the invention by damping, since by way of the slowed down movement a flicking into the end position is advantageously prevented. With the refueling flap according to the invention even the spring force for keeping the refueling flap in the end positions may be done away with.

A preferred embodiment form of the invention is hereinafter described by way of the attached drawings.
- Fig. 1: shows a sectioned lateral view of a refueling trough with a refueling flap according to the invention in the closed position.
- Fig. 2: shows the same view as Fig. 1 with an additionally free-sectioned damper and pinion.
- Fig. 3: shows a sectioned lateral view of the refueling trough and the refueling flap of Fig. 1 in the open position.

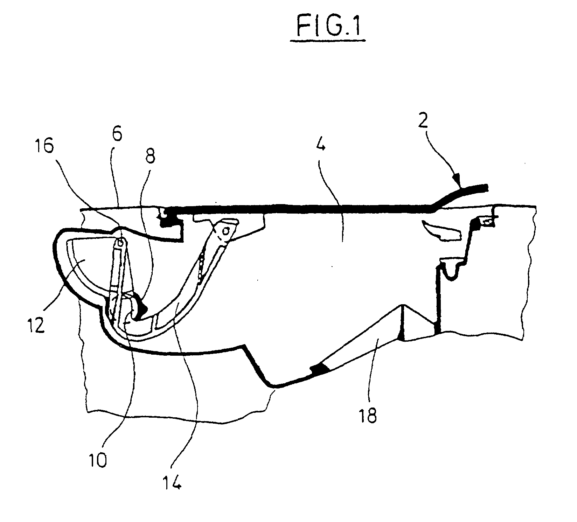

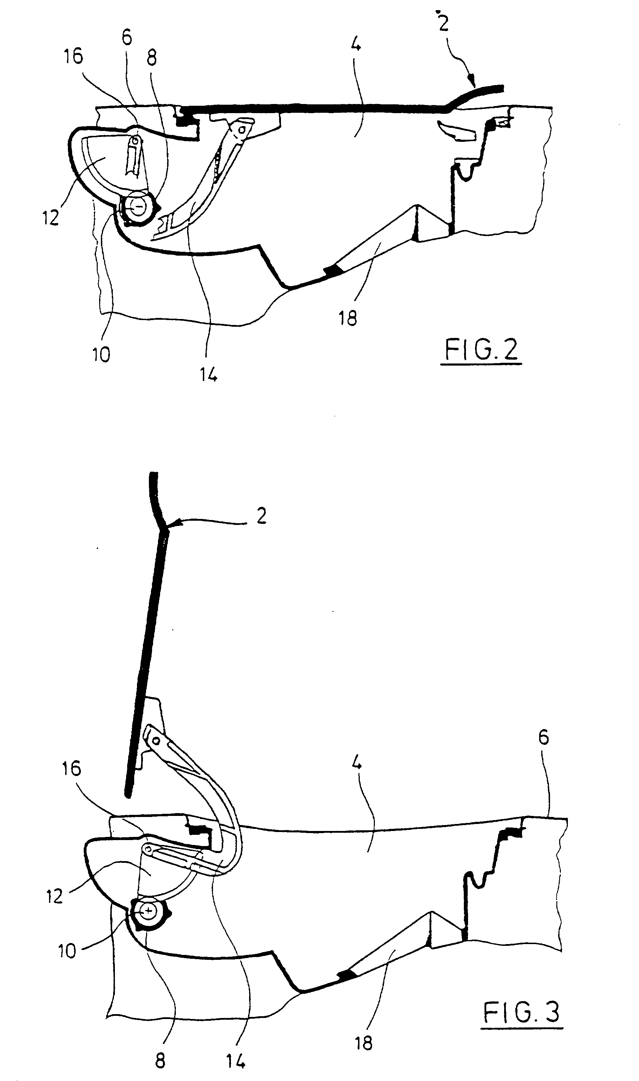

With respect to Figs 1, 2, 3 there is shown a refueling trough 4 as a deepening in a car body 6, in whose floor there is arranged an opening 18 for a refueling connection piece which e.g. may be closed by a rotary lock which is not shown. A refueling flap 2 is hinged via an arm 14 to a hinge 16 in the refueling trough 4. The arm 14 runs in the plane of the pivoting movement in a U-shaped manner. One limb of the U-shaped arm 14 projects in the open position of the refueling flap 2 (Fig. 3) out of the opening of the refueling trough. In this manner the refueling flap 2 is pivoted out of the region of the opening of the refueling trough 4 so that access is additionally simplified. In the closed position of the refueling flap 2 (Figs. 1 and 2) the arm lies in an indentation of the refueling trough 4. In the region of the indentation there is fastened to the walling of the refueling trough 4, stationarily with respect to the vehicle body 6, a rotary damper 8 filled with viscous fluid. A pinion 10, via the shaft of the rotatary damper 8, is in rotational connection with this (in Fig. 2 the arm 14 is cut away so that the damper 8 and the pinion 10 can be clearly recognised). A toothed segment 12 is rigidly connected to the arm 14 and cooperates with the pinion 10 in that their teeth are in mutual engagement. If the refueling flap 2 is opened the toothing of the toothed segment 12 traverses along the pinion 10 and displaces it into rotational movement so that the rotary damper 8 is actuated. In this manner the opening and closing movement of the refueling flap 2 is dampened. The toothed segment 12 at the same time is fastened to the limb of the U-shaped arm 14 which is hinged in the refueling trough 4.

## Claims

1. A refueling flap system for use within a refueling trough defined within a vehicle body, comprising
- a refueling flap (2)
- hinge means (16) for pivotally mounting the refuelling flap (2) between opened and closed positions with respect to the refueling trough (4) of the vehicle body (6)
- a toothed segment (12) movable by the refueling flap (2) and
- a rotary damper (8) filled with a viscous fluid and having a pinion (10) rotatably connected thereto, the pinion (10) meshing the toothed segment (8) to form a gear in order to dampen the movements of the refueling flap (2),
**characterized in that**
an arm (14) of U-shaped configuration is provided, a first limb of the arm (14) being attached to the refueling flap (2) to project out of the opening of the refueling through (4) in the opened position of the refueling flap (2) and a second limb is operably connected to hinge means (16) located in the refueling through (4), and **in that** the toothed segment (12) is fastened to the second limb.

2. A refueling flap system according to claim 1 or 2, **characterized in that** the toothed segment (12) and the arm (14) are formed as one piece.

## Patentansprüche

1. Tankklappensystem für eine Tankmulde an einer Fahrzeugkarosserie, die folgendes aufweist:
- eine Tankklappe (2),
- Gelenkmittel (16) zur schwenkbaren Befestigung der Tankklappe (2) zwischen geöffneten und geschlossenen Positionen bezogen auf die Tankmulde (4) der Fahrzeugkarosserie (6),
- ein Zahnsegment (12), das durch die Tankklappe (2) bewegt wird, und
- einen mit einem viskosen Fluid gefüllten Drehdämpfer, der mit einem Ritzel (10) in Drehverbindung steht, wobei das Ritzel (10) in dem Zahnsegment kämmt, um ein Getriebe zu bilden und die Bewegung der Tankklappe (2) zu dämpfen,
**dadurch gekennzeichnet, daß**
ein U-förmiger Arm (14) vorgesehen ist, wobei ein erster Schenkel des Arms (14) an der Tankklappe (2) angebracht ist, um aus der Öffnung der Tankmulde (4) in der geöffneten Position der Tankklappe (2) vorzustehen, und ein zweiter Schenkel mit den Gelenkmitteln (16) in der Tankmulde (4) verbunden ist, und daß das Zahnsegment (12) an dem zweiten Schenkel befestigt ist.

2. Tankklappensystem nach Anspruch 1, **dadurch gekennzeichnet, daß** das Zahnsegment (12) und der Arm (14) einstückig ausgebildet sind.

## Revendications

1. Système de volet de ravitaillement en carburant destiné à être utilisé dans une auge de ravitaillement en carburant formée dans une caisse de véhicule, comprenant
- un volet de ravitaillement en carburant (2),
- une charnière (16) pour le montage basculant du volet de ravitaillement en carburant (2) entre une position ouverte et une position fermée par rapport à l'auge de ravitaillement en carburant (2) de la caisse de véhicule (6),
- un secteur denté (12) mû par le volet de ravitaillement en carburant (2) et
- un amortisseur tournant (8) rempli d'un fluide visqueux et ayant un pignon (10) solidaire en rotation de lui, ce pignon (10) engrenant avec le secteur denté (8) pour former un engrenage afin d'amortir les mouvements du volet de ravitaillement en carburant (2),
**caractérisé par le fait**
**qu'**il est prévu un bras (14) en forme de U dont une première branche est jointe au volet de ravitaillement en carburant (2) de façon à faire saillie de l'ouverture de l'auge de ravitaillement en carburant (4) lorsque le volet de ravitaillement en carburant (2) est en position ouverte, et dont une deuxième branche est jointe fonctionnellement à la charnière (16) située dans l'auge de ravitaillement en carburant (4), et que le secteur denté (12) est attaché à la deuxième branche.

2. Système de volet de ravitaillement en carburant selon la revendication 1, **caractérisé par le fait que** le secteur denté (12) et le bras (14) forment une seule pièce.
